# EUROPÄISCHE PATENTANMELDUNG

(11) **EP 4 582 647 A1**
(43) Veröffentlichungstag der Anmeldung: **09.07.2025**
(21) Anmeldenummer: 24150692.2
(22) Anmeldetag: 08.01.2024
(51) Int. Cl.: E04D 11/00, A01G 9/02, A01G 9/033, E04D 1/30

(54) **MODULARES GRÜNDACH-WANDELEMENT MIT INTEGRIERTER DRAINAGE**

(71) Anmelder: Béres, Melinda Margit, 75417 Mühlacker (DE)
(72) Erfinder: Die Erfindernennung liegt noch nicht vor
(74) Vertreter: Jeck, Jonathan

(57) **Zusammenfassung**

Die vorliegende Erfindung bezieht sich auf ein Gründach-Wand-Element, das für die modulare Befestigung an einer Basisschicht ausgelegt ist. Das Element umfasst einen Pflanzenbehälter mit einem integrierten Drainagesystem am Boden. Der Pflanzenbehälter wird mit Befestigungsmaterialien auf der Basisschicht befestigt. Das Drainagesystem des Pflanzenbehälters ist mit dem Drainagesystem benachbarter Pflanzenbehälter verbunden, um ein gemeinsames extensives Gründach-Wand-System zu schaffen. Das Element enthält auch eine Verbindung zu einem Wassermanagementsystem zur Speicherung und Umverteilung von Wasser. Das Wassermanagementsystem umfasst einen Regenwassertank. Die Basisschicht umfasst eine Nut- und Feder-Verbindung zur Verriegelung benachbarter Module.

## Beschreibung

Das Gebiet der vorliegenden Patentanmeldung bezieht sich auf Gründach-Wandelemente, insbesondere solche, die zur modularen Befestigung an einer Basisschicht konzipiert sind. Der Fokus liegt auf der Integration eines Drainagesystems und eines Wasserbewirtschaftungssystems in diese Elemente. Die vorliegende Patentanmeldung geht nicht auf die breiteren Aspekte von Gründach-Wandelementen ein, wie solche ohne integrierte Drainage- oder Wasserbewirtschaftungssysteme.

In Bezug auf den Stand der Technik Dokument "Male et Al" unterscheidet sich die vorliegende Patentanmeldung, gemäß Anspruch 1, in ihrem Ansatz zur Gestaltung und Funktionalität des Gründach-Wandelements. Während "Male et Al" ein Gründach beschreibt, das aus einer Tragstruktur, einer an der Tragstruktur befestigten Dachabdeckvorrichtung und einer Vielzahl von pflanzenbedeckten Substraten besteht, führt die vorliegende Patentanmeldung ein Gründach-Wandelement mit einem integrierten fluidisch verbundenen Drainagesystem am Boden eines Pflanzenbehälters ein. Dieses Element ist zur modularen Befestigung an einer Basisschicht konzipiert und umfasst Mittel zur Verbindung des Drainagesystems des Pflanzenbehälters mit dem Drainagesystem benachbarter Pflanzenbehälter, um ein gemeinsames umfangreiches Gründach-Wandsystem zu schaffen. Darüber hinaus umfasst die vorliegende Patentanmeldung Verbindungsmittel zu einem Wasserbewirtschaftungssystem zur Speicherung und Umverteilung von Wasser.

Diese Vergleiche sind nicht abschließend und decken nicht alle Aspekte des Standes der Technik auf dem Gebiet der Gründach-Wandelemente ab. Sie veranschaulichen lediglich die Unterschiede zwischen der vorliegenden Patentanmeldung und dem verwandten Stand der Technik Dokument "Male et Al".

Im Allgemeinen beinhaltet in einem ersten Aspekt das Thema ein Gründach-Wandelement, das zur modularen Befestigung an einer Basisschicht geeignet ist. Dieses Element umfasst einen Pflanzenbehälter mit einem integrierten fluidisch verbundenen Drainagesystem an seinem Boden. Das Element umfasst auch Befestigungsmaterialien zur Befestigung des Pflanzenbehälters an der Basisschicht. Darüber hinaus umfasst das Element Mittel zur Verbindung des Drainagesystems des Pflanzenbehälters mit dem Drainagesystem benachbarter Pflanzenbehälter, wie einen Auslass, um ein gemeinsames umfangreiches Gründach-Wandsystem zu schaffen. Das Element umfasst auch Verbindungsmittel zu einem Wasserbewirtschaftungssystem zur Speicherung und Umverteilung von Wasser.

Ausführungsformen des Gegenstandes können eines oder mehrere der folgenden Merkmale umfassen. Das grüne Dach-Wand-Element kann weiterhin ein Dichtungsband enthalten, das vorab an der Basisschicht angebracht ist, um zwischen den Pflanzenbehältern abzudichten. Die Pflanzenbehälter können durch einen flexiblen Verbinder miteinander verbunden sein. Das Wassermanagementsystem kann einen Regenwasserspeichertank umfassen. Die Basisschicht kann eine Nut- und Feder-Verbindung für das Verriegeln benachbarter Pflanzenbehälter enthalten. Die Pflanzenbehälter können mit der Basisschicht vormontiert sein. Die Pflanzenbehälter können an den Verbindungspunkten mit der Basisschicht mit selbstklebenden EPDM- oder Bitumenringen abgedichtet sein. Die Pflanzenbehälter können einen wasserdurchlässigen Filter enthalten, um das Drainagesystem vor Substrat- und Wurzeleinwuchs zu schützen. Die Verbindungsmittel zu einem Wassermanagementsystem können die Mittel zur Verbindung des Drainagesystems eines Pflanzenbehälters sein.

**Abb. 1** ist eine schematische Darstellung eines modularen grünen Dach-Wand-Elementsystems, das die Anordnung verschiedener Komponenten und ihre Funktionen veranschaulicht.

**Abb. 2** zeigt eine isometrische Ansicht eines modularen grünen Dach-WandElements, das die einzelnen Komponenten und ihre Montagemethode präsentiert.

**Abb. 3** ist eine isometrische Ansicht eines modularen grünen Dach-Wand-Elementsystems, das zeigt, wie die Elemente miteinander verbunden und an die Dachstruktur angebracht sind.

**Abb. 4** ist eine Explosionsperspektive eines modularen grünen Dach-WandElements, die die Montage verschiedener Komponenten und ihre Verbindungen zeigt.

Nach einem Aspekt kann ein grünes Dach-Wand-Element zur modularen Befestigung an einer Basisschicht (1) bereitgestellt werden. Dieses Element kann einen Pflanzenbehälter (5) mit einem integrierten fluidisch verbundenen Drainagesystem (10) am Boden umfassen. Der Pflanzenbehälter (5) kann so gestaltet sein, dass er eine Vielzahl von Pflanzenarten beherbergen kann, was zur ästhetischen und ökologischen Wirkung des grünen Dach-Wand-Systems beiträgt. Das integrierte Drainagesystem (10) kann so gestaltet sein, dass es überschüssiges Wasser verwaltet, Wasserstau verhindert und die Gesundheit der Pflanzen fördert.

Das grüne Dach-Wand-Element kann auch Befestigungsmaterialien (7) zur Befestigung des Pflanzenbehälters (5) an der Basisschicht (1) umfassen. Diese Befestigungsmaterialien (7) können verschiedener Art sein, wie Schrauben, Bolzen oder andere geeignete Befestigungselemente, und können so gestaltet sein, dass sie den Pflanzenbehälter (5) sicher an der Basisschicht (1) befestigen, was die Stabilität und Langlebigkeit des grünen Dach-Wand-Systems gewährleistet.

Das grüne Dach-Wand-Element kann weiterhin Mittel zur Verbindung des Drainagesystems (10) des Pflanzenbehälters (5) mit dem Drainagesystem (10) benachbarter Pflanzenbehälter umfassen. Dies kann durch einen Auslass (8), wie ein Rohr oder einen Kanal, erreicht werden, der die Schaffung eines gemeinsamen extensiven grünen Dach-Wand-Systems erleichtern kann. Dieses verbundene Drainagesystem kann eine effiziente Wasserbewirtschaftung über das gesamte grüne Dach-Wand-System ermöglichen, indem es sicherstellt, dass überschüssiges Wasser effektiv von allen Pflanzenbehältern (5) abgeleitet wird.

Das grüne Dach-Wand-Element kann auch Verbindungsmittel zu einem Wassermanagementsystem (14) zur Speicherung und Umverteilung von Wasser umfassen. Dieses Wassermanagementsystem (14) kann Komponenten wie einen Regenwasserspeichertank (11), Pumpen, Rohre und Steuersysteme umfassen. Das System kann so gestaltet sein, dass es Regenwasser sammelt, es in dem Speichertank (11) speichert und es bei Bedarf an die Pflanzenbehälter (5) weiterleitet. Dies kann zur Nachhaltigkeit des grünen Dach-Wand-Systems beitragen, indem es die Abhängigkeit von externen Wasserquellen reduziert und den effizienten Einsatz von Wasser fördert.

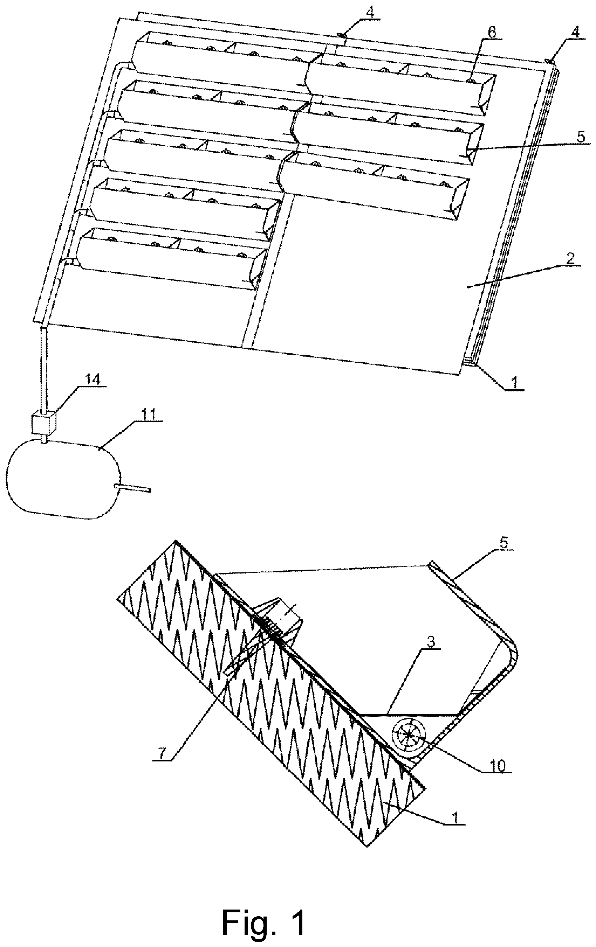

Bezugnehmend auf Abbildung 1 kann das grüne Dach-Wand-Element eine Basisschicht, auch bekannt als Aufsparrendämmung (1), umfassen. Die Aufsparrendämmung (1) kann als grundlegende Schicht des grünen Dach-Wand-Systems dienen und strukturelle Unterstützung für die anderen Komponenten bieten. Die Aufsparrendämmung (1) kann aus verschiedenen Materialien hergestellt sein, die geeignet sind, Isolierung und Tragfähigkeit zu bieten. In einigen Fällen kann die Aufsparrendämmung (1) aus Polyurethan (PUR) Schaum oder anderen tragfähigen Isolationsplatten hergestellt sein. Diese Materialien können aufgrund ihrer hervorragenden thermischen Isoliereigenschaften, strukturellen Stärke und Feuchtigkeitsbeständigkeit ausgewählt werden, was sie ideal für den Einsatz in einem grünen Dach-Wand-System macht.

In einigen Fällen kann die Aufsparrendämmung (1) mit einer Nut- und Feder-Verbindung (15) ausgestattet sein, die das Verriegeln benachbarter Module erleichtern kann. Dieses Merkmal kann die Modularität des grünen Dach-Wand-Systems verbessern, indem es eine einfache Montage und Demontage ermöglicht sowie Reparaturen oder Modifikationen erleichtert.

Das grüne Dach-Wand-Element kann auch ein Dichtungsband (4) enthalten, das vorab an der Aufsparrendämmung (1) angebracht ist. Das Dichtungsband (4) kann so gestaltet sein, dass es eine wasserdichte Abdichtung zwischen benachbarten Modulen bietet, Wasserlecks verhindert und die Gesamtwasserdichtigkeit des grünen Dach-Wand-Systems gewährleistet. Das Dichtungsband (4) kann aus verschiedenen Materialien hergestellt sein, die für ihre Dichtungseigenschaften bekannt sind. In einigen Fällen kann das Dichtungsband (4) aus Ethylen-Propylen-Dien-Monomer (EPDM) oder Bitumen hergestellt sein. Diese Materialien können aufgrund ihrer hervorragenden Dichtungseigenschaften, Haltbarkeit und Widerstandsfähigkeit gegen Umweltfaktoren wie UV-Strahlung und Temperaturschwankungen ausgewählt werden. Das Dichtungsband (4) kann an der Nut und Feder (15) der Aufsparrendämmung (1) vormontiert sein, was den Montageprozess erleichtert und eine sichere und wasserdichte Verbindung zwischen benachbarten Pflanzenbehältern gewährleistet.

Bezugnehmend auf Abbildung 1 kann das grüne Dach-Wand-Element Pflanzenbehälter enthalten, auch bekannt als Pflanzenkübel (5). Diese Pflanzenkübel (5) können so gestaltet sein, dass sie eine Vielzahl von Pflanzenarten beherbergen, was zur ästhetischen und ökologischen Aufwertung des grünen Dach-Wand-Systems beiträgt. Die Pflanzenkübel (5) können aus verschiedenen Materialien hergestellt sein, die für das Pflanzenwachstum geeignet und widerstandsfähig gegen Umweltbedingungen sind. In einigen Fällen können die Pflanzenkübel (5) aus langlebigen, wetterfesten Materialien wie Kunststoff, Metall oder Keramik hergestellt sein.

In einigen Fällen können die Pflanzenkübel (5) einen wasserdurchlässigen Filter enthalten, auch bekannt als Wasserdurchlässiger Filter (3). Dieser Filter (3) kann so gestaltet sein, dass er Wasser durchlässt, während er verhindert, dass Substrat und Wurzeln das Entwässerungssystem (10) verstopfen. Der Filter (3) kann aus verschiedenen Materialien hergestellt sein, die für ihre Filtereigenschaften bekannt sind. In einigen Fällen kann der Filter (3) aus Geotextilien hergestellt sein, die für ihre hervorragende Wasserdurchlässigkeit und Widerstandsfähigkeit gegen Wurzeldurchdringung bekannt sind.

Die Pflanzenkübel (5) können mit speziellen Schrauben, auch bekannt als Befestigungsmaterial (7), an der Aufsparrendämmung (1) befestigt werden. Diese Schrauben (7) können so gestaltet sein, dass sie die Pflanzenkübel (5) sicher an der Aufsparrendämmung (1) befestigen, was die Stabilität und Haltbarkeit des grünen Dach-Wand-Systems gewährleistet. Die Schrauben (7) können aus verschiedenen Materialien hergestellt sein, die für ihre Festigkeit und Korrosionsbeständigkeit bekannt sind. In einigen Fällen können die Schrauben (7) aus rostfreiem Stahl oder anderen korrosionsbeständigen Materialien hergestellt sein.

In einigen Fällen kann das gesamte Modul, also Basisschicht mit einem oder mehreren miteinander verbundenen Pflanzenkübeln (5), vormontiert sein. Diese Vormontage kann den Installationsprozess erleichtern, indem sie die Zeit und den Aufwand für die Einrichtung des grünen Dach-Wand-Systems reduziert. Die Vormontage kann das Anbringen der Pflanzenkübel (5) an der Aufsparrendämmung (1) mit dem Befestigungsmaterial (7), das Aufbringen des Dichtungsbandes (4) auf die Aufsparrendämmung (1) und das Einsetzen des Wasserdurchlässigen Filters (3) in die Pflanzenkübel (5) beinhalten. Dieser Vormontageprozess kann in einer kontrollierten Umgebung durchgeführt werden, um die Qualität und Konsistenz der montierten Module zu gewährleisten.

Bezugnehmend auf Abbildung 1 können die Pflanzenbehälter, auch bekannt als Pflanzenkübel (5), ein integriertes, fluidisch verbundenes Entwässerungssystem (10) am Boden enthalten. Dieses Entwässerungssystem (10) kann so gestaltet sein, dass es überschüssiges Wasser verwaltet, Wasserstau verhindert und die Gesundheit der Pflanzen fördert. Das Entwässerungssystem (10) kann verschiedene Komponenten wie Rohre, Kanäle oder andere geeignete Mittel zur Ableitung von Wasser aus den Pflanzenbehältern (5) enthalten. In einigen Fällen kann das Entwässerungssystem (10) so gestaltet sein, dass es überschüssiges Wasser zu einem zentralen Entwässerungspunkt leitet, was eine effiziente Wasserwirtschaft über das gesamte grüne Dach-Wand-System ermöglicht.

In einigen Fällen können die Pflanzenkübel (5) einen wasserdurchlässigen Filter enthalten, auch bekannt als Wasserdurchlässiger Filter (3). Dieser Filter (3) kann so gestaltet sein, dass er Wasser durchlässt, während er verhindert, dass Substrat und Wurzeln das Entwässerungssystem (10) verstopfen. Der Filter (3) kann aus verschiedenen Materialien hergestellt sein, die für ihre Filtereigenschaften bekannt sind. In einigen Fällen kann der Filter (3) aus Geotextilien hergestellt sein, die für ihre hervorragende Wasserdurchlässigkeit und Widerstandsfähigkeit gegen Wurzeldurchdringung bekannt sind. Dieser Filter (3) kann am Boden des Pflanzenkübels (5) positioniert sein, um das Entwässerungssystem (10) vor Substrat- und Wurzeleinwuchs zu schützen.

Der Pflanzenkübel (5) kann mit speziellen Schrauben, auch bekannt als Befestigungsmaterial (7), an der Aufsparrendämmung (1) befestigt werden. Diese Schrauben (7) können so gestaltet sein, dass sie den Pflanzenkübel (5) sicher an der Aufsparrendämmung (1) befestigen, um die Stabilität und Langlebigkeit des Gründach-Wandsystems zu gewährleisten. Die Verbindungspunkte zwischen dem Pflanzenkübel (5) und der Aufsparrendämmung (1) können mit selbstklebenden EPDM- oder Bitumenringen, auch bekannt als Abdichtung (9), abgedichtet werden. Diese Ringe (9) können so gestaltet sein, dass sie an den Verbindungspunkten eine wasserdichte Abdichtung bieten, um Wasseraustritt zu verhindern und die allgemeine Wasserdichtigkeit des Gründach-Wandsystems zu gewährleisten.

Das Gründach-Wandelement kann auch Verbindungsmittel zu einem Wassermanagementsystem (14) für die Speicherung und Umverteilung von Wasser enthalten. Dieses Wassermanagementsystem (14) kann Komponenten wie einen Regenwasserspeichertank (11), Pumpen, Rohre und Steuerungssysteme umfassen. Das System kann so gestaltet sein, dass es Regenwasser sammelt, es in dem Speichertank (11) speichert und es bei Bedarf an die Pflanzenbehälter (5) weiterleitet. Dies kann zur Nachhaltigkeit des Gründach-Wandsystems beitragen, indem die Abhängigkeit von externen Wasserquellen reduziert und der effiziente Wasserverbrauch gefördert wird. In einigen Fällen können die Verbindungsmittel zum Wassermanagementsystem (14) die Mittel zur Verbindung des Entwässerungssystems (10) eines Pflanzenbehälters sein, was ein effizientes Wassermanagement über das gesamte Gründach-Wandsystem ermöglicht.

Bezugnehmend auf Abbildung 1, kann das Gründach-Wandelement ein Wassermanagementsystem (14) zur Speicherung und Umverteilung von Wasser enthalten. Dieses Wassermanagementsystem (14) kann verschiedene Komponenten wie einen Regenwasserspeichertank (11), Pumpen, Rohre und Steuerungssysteme umfassen. Das System kann so gestaltet sein, dass es Regenwasser sammelt, es in dem Speichertank (11) speichert und es bei Bedarf an die Pflanzenbehälter (5) weiterleitet.

Der Regenwasserspeichertank (11), auch bekannt als Regenwasserspeicher, kann Teil des Wassermanagementsystems (14) sein. Er kann so gestaltet sein, dass er große Mengen an Wasser speichert, das während des Regens gesammelt wird. Der Speichertank (11) kann aus verschiedenen Materialien hergestellt sein, die für ihre Langlebigkeit und Korrosionsbeständigkeit bekannt sind. In einigen Fällen kann der Speichertank (11) aus Kunststoff, Metall oder anderen geeigneten Materialien hergestellt sein. Die Größe und Kapazität des Speichertanks (11) kann je nach Größe des Gründach-Wandsystems und den lokalen Klimabedingungen variieren.

In einigen Fällen kann während Perioden hoher Temperaturen das Wasser aus dem Speichertank (11) wieder in die Module zurückgeführt werden. Dies kann durch eine Reihe von Pumpen und Rohren erreicht werden, die von einem Steuerungssystem gesteuert werden können. Dieses Steuerungssystem kann so gestaltet sein, dass es die Wasserstände in den Pflanzenbehältern (5) und dem Speichertank (11) überwacht und die Pumpen bei Bedarf aktiviert. Dieser Prozess der Speicherung und Umverteilung von Wasser kann zur Nachhaltigkeit des Gründach-Wandsystems beitragen, indem die Abhängigkeit von externen Wasserquellen reduziert und der effiziente Wasserverbrauch gefördert wird.

Die Verbindungsmittel zum Wassermanagementsystem (14) können die Mittel zur Verbindung des Entwässerungssystems (10) eines Pflanzenbehälters sein. Dies kann ein effizientes Wassermanagement über das gesamte Gründach-Wandsystem ermöglichen, indem sichergestellt wird, dass überschüssiges Wasser effektiv von allen Pflanzenbehältern (5) abgeleitet und für die spätere Verwendung in dem Speichertank (11) gespeichert wird. Dieses vernetzte System aus Entwässerung und Wassermanagement kann zur allgemeinen Effizienz und Nachhaltigkeit des Gründach-Wandsystems beitragen.

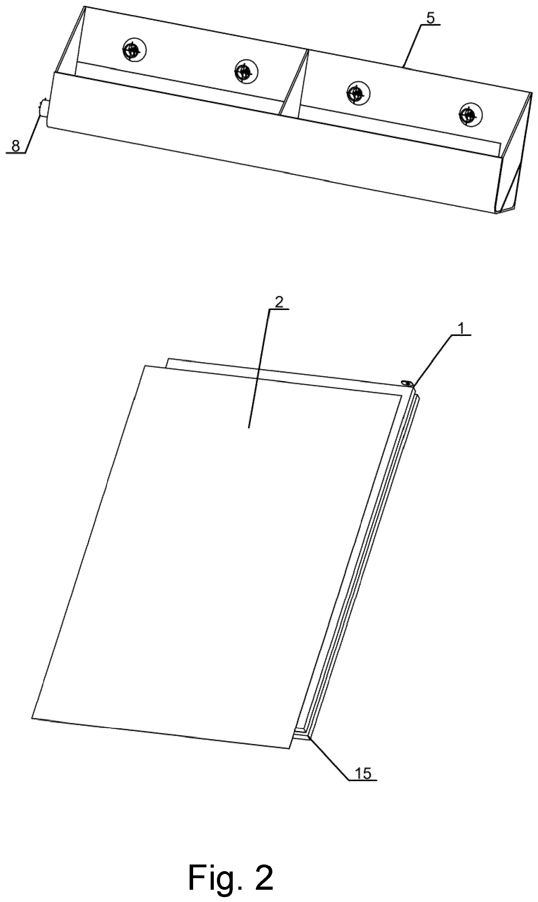

Bezugnehmend auf Abbildung 2, kann das Gründach-Wandelement eine Basisschicht, auch bekannt als Aufsparrendämmung (1), mit einer vorstehenden Kante, die ein zungenähnliches Merkmal aufweist, enthalten. Dieses Merkmal ist Teil der Nut-Federverbindung (15), die dazu dient, benachbarte Module zu verriegeln. Die Nut-Federverbindung (15) kann die Montage des Gründach-Wandsystems erleichtern, indem sie eine einfache Verbindung benachbarter Module ermöglicht. Dieses Verriegelungsmerkmal kann die Modularität des Systems verbessern, indem es eine einfache Montage und Demontage sowie Reparaturen oder Modifikationen erleichtert. Die Nut-Federverbindung (15) kann so gestaltet sein, dass sie eine sichere und stabile Verbindung zwischen benachbarten Modulen gewährleistet, was die allgemeine Stabilität und Langlebigkeit des Gründach-Wandsystems sicherstellt.

Die Wasserabdichtung (2) kann dazu dienen, über der Aufsparrendämmung (1) angebracht zu werden, um die Wasserdichtigkeit zu gewährleisten. Die Wasserabdichtung kann eine Überlappung mit benachbarten Modulen aufweisen, wodurch eine besonders effektive Wasserdichtigkeit erreichbar ist, wie beispielsweise aus Fig. 2 hervorgeht. Die Wasserabdichtung (2) kann aus verschiedenen Materialien hergestellt sein, die für ihre wasserabweisenden Eigenschaften bekannt sind. In einigen Fällen kann die Wasserabdichtung (2) aus Ethylen-Propylen-Dien-Monomer (EPDM) oder Bitumen hergestellt sein. Diese Materialien können aufgrund ihrer hervorragenden wasserabweisenden Eigenschaften, Langlebigkeit und Widerstandsfähigkeit gegen Umweltfaktoren wie UV-Strahlung und Temperaturschwankungen ausgewählt werden.

Über der Aufsparrendämmung (1) ist der Pflanzenkübel (5) in einer ausgerichteten Position dargestellt, bereit, mit dem Befestigungsmaterial (7), das in dieser Ansicht nicht sichtbar ist, auf der Basis befestigt zu werden. Der Pflanzenkübel (5) kann so gestaltet sein, dass er eine Vielzahl von Pflanzenarten beherbergen kann, was zur ästhetischen und ökologischen Aufwertung des Gründach-Wandsystems beiträgt. Der Pflanzenkübel (5) kann aus verschiedenen Materialien hergestellt sein, die für das Pflanzenwachstum geeignet sind und den Umweltbedingungen standhalten. In einigen Fällen kann der Pflanzenkübel (5) aus langlebigen, wetterfesten Materialien wie Kunststoff, Metall oder Keramik hergestellt sein.

Die Montagestruktur wird mit dem Elementstoß (8) vervollständigt, der am Ende des Pflanzenkübels (5) positioniert ist, um die modulare Verbindung zu erleichtern. Der Elementstoß (8) kann ein flexibler Verbinder sein, der dazu ausgelegt ist, den Pflanzenkübel (5) mit benachbarten Pflanzenkübeln (5) zu verbinden. Dieser flexible Verbinder (8) kann die Montage des Gründach-Wandsystems erleichtern, indem er eine einfache Verbindung benachbarter Pflanzenkübel (5) ermöglicht. Der flexible Verbinder (8) kann so gestaltet sein, dass er eine sichere und stabile Verbindung zwischen benachbarten Pflanzenkübeln (5) gewährleistet und so die allgemeine Stabilität und Langlebigkeit des Gründach-Wandsystems sicherstellt.

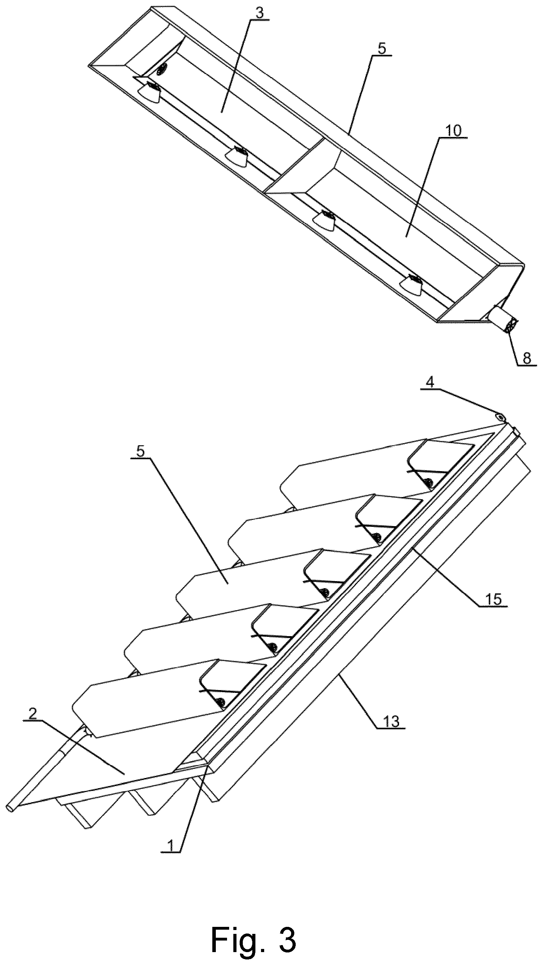

Bezugnehmend auf Abbildung 3, kann das Gründach-Wandelement zur Befestigung an einer Dachstruktur, auch bekannt als Dachunterkonstruktion (13), ausgelegt sein. Die Dachunterkonstruktion (13) kann die strukturelle Unterstützung für das Gründach-Wandsystem bieten und so dessen Stabilität und Langlebigkeit gewährleisten. Die Aufsparrendämmung (1) kann so ausgelegt sein, dass sie mit verschiedenen Befestigungsmethoden an der Dachunterkonstruktion (13) befestigt wird. In einigen Fällen kann die Befestigung durch einen Verschraubungsprozess, auch bekannt als Verschraubung (12), erreicht werden. Die Verschraubung (12) kann die Verwendung von Schrauben oder anderen geeigneten Befestigungsmitteln beinhalten, um die Aufsparrendämmung (1) sicher an der Dachunterkonstruktion (13) zu befestigen.

Die Pflanzenkübel (5), die Pflanzenbehälter, können über der wasserdichten Schicht, auch bekannt als Wasserabdichtung (2), befestigt werden. Die Wasserabdichtung (2) kann so ausgelegt sein, dass sie über der Aufsparrendämmung (1) liegt, um eine wasserdichte Abdichtung zu bieten, die Wassereinbrüche verhindert und die allgemeine Wasserdichtigkeit des Gründach-Wandsystems gewährleistet. Die Pflanzenkübel (5) können an Anbindungspunkten (6) mit Befestigungsmaterial (7) verbunden werden, was eine dichte Verbindung mit dem Dichtungsband (4) gewährleistet. Das Dichtungsband (4) kann ein Dichtungsband sein, das dazu ausgelegt ist, eine wasserdichte Abdichtung zwischen benachbarten Modulen zu bieten, Wassereinbrüche zu verhindern und die allgemeine Wasserdichtigkeit des Gründach-Wandsystems zu gewährleisten.

In einigen Fällen kann die Schraube (7), die zur Befestigung des Pflanzenkübels (5) an der Aufsparrendämmung (1) verwendet wird, in einer Senkung durch einen Stopfen (6) geschützt werden. Dieser Stopfen (6) kann so ausgelegt sein, dass er passgenau in die Senkung passt, die Schraube (7) abdeckt und sie vor Umwelteinflüssen wie Feuchtigkeit und Schmutz schützt. Der Stopfen (6) kann aus verschiedenen Materialien hergestellt sein, die für ihre Langlebigkeit und Widerstandsfähigkeit gegen Umweltbedingungen bekannt sind. In einigen Fällen kann der Stopfen (6) aus Kunststoff, Metall oder anderen geeigneten Materialien hergestellt sein.

Am Boden des Pflanzenkübels (5) kann eine Drainage (10) eingebaut sein, um das Wassermanagement zu erleichtern. Dieses Drainagesystem (10) kann so ausgelegt sein, dass es überschüssiges Wasser bewältigt, Wasserstau verhindert und die Gesundheit der Pflanzen fördert. Das Drainagesystem (10) kann verschiedene Komponenten wie Rohre, Kanäle oder andere geeignete Mittel zur Ableitung von Wasser aus den Pflanzenbehältern (5) umfassen.

Schließlich können die Elemente des Gründach-Wandsystems an den Seiten durch eine Nut-Federverbindung (15) miteinander verbunden sein, was die Modularität und die einfache Installation fördert. Die Nut-Federverbindung (15) kann eine Nut- und Feder-Verbindung sein, die dazu ausgelegt ist, benachbarte Module zu verriegeln und so die Montage des Gründach-Wandsystems zu erleichtern. Diese Verriegelungsfunktion kann die Modularität des Systems verbessern, eine einfache Montage und Demontage ermöglichen sowie Reparaturen oder Modifikationen erleichtern.

In einigen Fällen können die Pflanzenkübel (5) vormontiert mit der Aufsparrendämmung (1) geliefert werden. Diese Vormontage kann den Installationsprozess erleichtern, indem sie die Zeit und den Aufwand reduziert, die für die Einrichtung des Gründach-Wandsystems erforderlich sind. Die Vormontage kann das Anbringen des Pflanzenkübels (5) an der Aufsparrendämmung (1) mit dem Befestigungsmaterial (7), das Aufbringen des Dichtungsbandes (4) auf die Aufsparrendämmung (1) und das Einsetzen des wasserdurchlässigen Filters (3) in den Pflanzenkübel (5) beinhalten. Dieser Vormontageprozess kann in einer kontrollierten Umgebung durchgeführt werden, um die Qualität und Konsistenz der montierten Module zu gewährleisten.

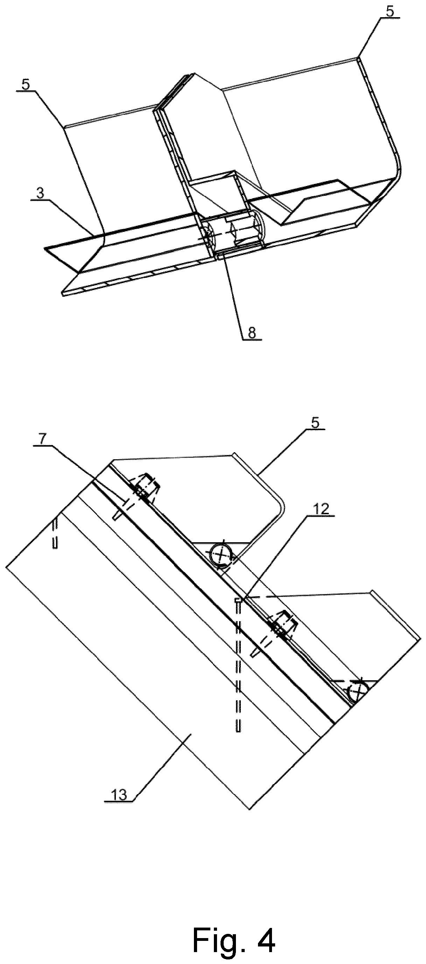

Bezugnehmend auf Abbildung 4 kann das grüne Dach-Wand-Element durch Verbindung verschiedener Komponenten montiert werden. Die Pflanzenbehälter, auch bekannt als Pflanzenkübel (5), sind dafür ausgelegt, Pflanzen zu beherbergen und werden mit Befestigungsmaterialien, auch bekannt als Befestigungsmaterial (7), an einer Basis befestigt, durch Verbindungspunkte, auch bekannt als Anbindungspunkte (11). Die Pflanzenkübel (5) können aus verschiedenen Materialien hergestellt werden, die für das Pflanzenwachstum geeignet und widerstandsfähig gegen Umweltbedingungen sind. In einigen Fällen können die Pflanzenkübel (5) aus langlebigen, wetterfesten Materialien wie Kunststoff, Metall oder Keramik hergestellt werden.

Unter den Pflanzenkübeln (5) werden wasserdurchlässige Filter, auch bekannt als Wasserdurchlässige Filter (3), platziert, um Wasser durchzulassen, während sie verhindern, dass Substrat und Wurzeln das System verstopfen. Der Filter (3) kann aus verschiedenen Materialien hergestellt werden, die für ihre Filtereigenschaften bekannt sind. In einigen Fällen kann der Filter (3) aus Geotextilien hergestellt werden, die für ihre hervorragende Wasserdurchlässigkeit und Widerstandsfähigkeit gegen Wurzeldurchdringung bekannt sind.

Die Montage umfasst eine Dachunterkonstruktion, auch bekannt als Dachunterkonstruktion (13), die strukturelle Unterstützung für das grüne Dach-Wand-System bietet. Die Dachunterkonstruktion (13) kann aus verschiedenen Materialien hergestellt werden, die für ihre Festigkeit und Langlebigkeit bekannt sind. In einigen Fällen kann die Dachunterkonstruktion (13) aus Holz, Metall oder anderen geeigneten Materialien hergestellt werden.

Die Komponenten des grünen Dach-Wand-Systems sind durch eine Elementstoß mit Muffe (8), dargestellt als flexibler Verbinder, der die Montage erleichtert, miteinander verbunden. Die Elementstoß mit Muffe (8) kann ein flexibles Rohr sein, das dazu dient, die Pflanzenkübel (5) miteinander zu verbinden. Dieser flexible Verbinder (8) kann die Montage des grünen Dach-Wand-Systems erleichtern, indem er eine einfache Verbindung benachbarter Pflanzenkübel (5) ermöglicht. Der flexible Verbinder (8) kann so gestaltet sein, dass er eine sichere und stabile Verbindung zwischen benachbarten Pflanzenkübeln (5) gewährleistet und so die allgemeine Stabilität und Langlebigkeit des grünen Dach-Wand-Systems sicherstellt.

Die Zeichnung enthält auch eine detaillierte Ansicht der Komponenten, die die Verbindungen wie die Verschraubung zur Dachunterkonstruktion, auch bekannt als Verschraubung (12), hervorhebt, die das System an der zugrunde liegenden Struktur sichert. Die Verschraubung (12) kann die Verwendung von Schrauben oder anderen geeigneten Befestigungselementen beinhalten, um das grüne Dach-Wand-System sicher an der Dachunterkonstruktion (13) zu befestigen und so seine Stabilität und Langlebigkeit zu gewährleisten.

## Patentansprüche

1. Ein Gründach-Wandelement zur modularen Befestigung an einer Basisschicht (1) oder einem Dach, das Gründach-Wandelement umfasst:
einen Pflanzenbehälter (5) mit einem integrierten fluidisch verbundenen Drainagesystem (10) an dessen Boden;
Befestigungsmaterial (7) zur Befestigung des Pflanzenbehälters (5) an der Basisschicht (1); oder eine einstückige Ausbildung mit der Basisschicht, für eine Befestigung an einem Dach;
Mittel, wie einen Auslass, zur Verbindung des Drainagesystems (10) des Pflanzenbehälters (5) mit dem Drainagesystem (10) benachbarter Pflanzenbehälter, um ein gemeinsames Gründach-Wandsystem zu bilden; und
Verbindungsmittel zu einem Wasserbewirtschaftungssystem (14) zur Speicherung und Umverteilung von Wasser.

2. Das Gründach-Wandelement nach Anspruch 1, weiterhin umfassend ein Dichtungsband (4), das vorab an der Basisschicht (1) oder den Pflanzenbehältern angebracht ist, zur Abdichtung zwischen den Pflanzenbehältern.

3. Das Gründach-Wandelement nach Anspruch 1, wobei der Auslass ein flexibler Verbinder (8) ist.

4. Das Gründach-Wandelement nach Anspruch 1, wobei das Wasserbewirtschaftungssystem (14) einen Regenwasserspeichertank (11) umfasst.

5. Das Gründach-Wandelement nach Anspruch 1, wobei die Pflanzenbehälter (5) vorab mit der Basisschicht (1) zusammengebaut sind.

6. Das Gründach-Wandelement nach Anspruch 1, wobei die Basisschicht (1) eine Nut- und Feder-Verbindung (15) zur Verriegelung benachbarter Pflanzenbehälter (5) umfasst.

7. Das Gründach-Wandelement nach Anspruch 1, wobei die Pflanzenbehälter (5) an den Verbindungspunkten mit der Basisschicht (1) mit selbstklebenden EPDM- oder Bitumenringen (9) abgedichtet sind.

8. Das Gründach-Wandelement nach Anspruch 1, wobei die Pflanzenbehälter (5) einen wasserdurchlässigen Filter (3) enthalten, um das Drainagesystem (10) vor Substrat- und Wurzeleinwuchs aus dem Behälterkörper zu schützen.

9. Das Gründach-Wandelement nach Anspruch 1, wobei die Verbindungsmittel zu einem Wasserbewirtschaftungssystem die Mittel zur Verbindung des Drainagesystems (10) eines Pflanzenbehälters sind.
